# EUROPÄISCHE PATENTANMELDUNG

(11) **EP 1 674 736 A2**
(43) Veröffentlichungstag der Anmeldung: **28.06.2006**
(21) Anmeldenummer: 05025841.7
(22) Anmeldetag: 26.11.2005
(51) Int. Cl.: F15B 20/00, F16D 48/02, F16D 48/04

(54) **Hydrauliksystem mit Notöffnungsmechanismus für eine Kupplung mit servounterstützter Pedalbetätigung**

(30) Priorität: 22.12.2004 DE 102004062981
(71) Anmelder: LuK Lamellen und Kupplungsbau Beteiligungs KG, 77815 Bühl (DE)
(72) Erfinder: Grethel, Marco, 77830 Bühlertal (DE); Benz, Franz, 77855 Achern (DE)

(57) **Zusammenfassung**

Für das mittels der Kupplungsbetätigung ausführbare Öffnen einer Kupplung bei einem Ausfall des Systems mit pedalkraftunterstützter Druckbeaufschlagung der hydraulischen Strecke, bestehend aus zwei Hydraulikkreisläufen, wobei im ersten Kreislauf im Wesentlichen ein Geberzylinder (2) und ein Nehmerzylinder (3) angeordnet sind und der zweite Kreislauf aus einem Elektromotor und einer Pumpe (4) gebildet wird und beide Kreisläufe gegenseitig regelbar über einen Ventilblock (18) mit Druckventilschieber (5) und Druckventilfeder (6) miteinander in Verbindung stehen, ist in der hydraulischen Strecke ein Notöffnungsmechanismus (14) vorgesehen.

## Beschreibung

Die vorliegende Erfindung betrifft ein hydraulisches System zur Druckbeaufschlagung einer Kupplung mit einem Notöffnungsmechanismis, in das zur Reduzierung der Pedalkraft eine Einrichtung zur Druckerhöhung integriert ist. Üblicherweise wird für diese Druckerhöhung eine elektrische Pumpe eingesetzt, die den Druck zwischen Geber- und Nehmerzylinder in der hydraulischen Strecke zusätzlich erhöht. Diese Pumpe wird beispielsweise mittels Drucksensoren elektronisch geregelt, da der Pumpendruck abhängig vom Druck im hydraulischen System ist. Allerdings führt ein Ausfall dieser Pumpe oder des Elektromotors dazu, dass die Kupplung nicht, auch nicht durch einen erhöhten Kraftaufwand, betätigt werden kann. Dies liegt in der für die Kraftunterstützung im Normalbetrieb notwendigen konstruktiven Ausführung begründet.

Aus dem Stand der Technik sind Lösungen für mit elektromechanischen Aktoren betätigbare Kupplungen bekannt. Bei beispielsweise einem Stromausfall im Antriebssystem verharrt der Aktor in der jeweils aktuellen Stellung und die Kupplung ist nicht mehr zu öffnen. Um die Kupplung in dieser Situation dennoch öffnen zu können, ist zwischen Geber- und Nehmerzylinder ein Notöffnungsventil eingesetzt um darüber das hydraulische System manuell oder automatisch öffnen zu können. Durch dieses Öffnen des Ventils wird der Druck in den Vorratsbehälter entspannt und die zugedrückte Kupplung geöffnet.

In der WO 2004/053348 A2 wird eine Lösung zum Öffnen der Kupplung bei einem Ausfall der für die Kupplungsbetätigung notwendigen Elemente beschrieben. Fällt beispielsweise ein für die Kupplungsbetätigung notwendiges Element zu der Zeit aus, in der eine oder mehrere Kupplungen geschlossen sind, ist hierbei eine Möglichkeit vorgesehen, zum Zwecke eines Abschleppvorgangs des Fahrzeugs die Kupplung beziehungsweise die Kupplungen zu öffnen. Das geschieht beispielsweise durch Entlasten des hydraulischen Systems, indem die Druckleitung geöffnet und damit drucklos oder indem der Geberzylinder entlastet wird.

Bei einer Lösung zur Druckbeaufschlagung der Kupplung mittels Pedalkraftunterstützung kommen weitere Bauelemente, wie Elektromotor und Hydraulikpumpe in der hydraulischen Strecke hinzu, die ebenfalls bei einem Stromausfall ihre Funktion nicht mehr ausführen können und damit die Kupplung, oder bei einer Doppelkupplung beide Kupplungen, nicht mehr, auch nicht mit erhöhtem Kraftaufwand geöffnet werden können.

Daher ist es Aufgabe der Erfindung, dass die Öffnung der Kupplung bei einem Ausfall des Systems mittels der Kupplungsbetätigung mit einfachen Mitteln realisierbar ist.

Die Aufgabe der Erfindung wird durch die im Patentanspruch 1 angegebenen Merkmale gelöst. Bei einer pedalkraftunterstützten Druckbeaufschlagung für eine Kupplungsbetätigung besteht die hydraulische Strecke aus zwei Hydraulikkreisläufen. Im ersten Kreislauf sind im Wesentlichen ein Geberzylinder und ein Nehmerzylinder angeordnet und im zweiten Kreislauf ein Elektromotor und eine Pumpe. Beide Kreisläufe sind über einen Ventilblock mit Druckventilschieber und Druckventilfeder verbunden und darüber gegenseitig regelbar. Mittels eines in dieser hydraulischen Strecke vorgesehenen Notöffnungsmechanismus kann die Kupplung bei Ausfall des Systems geöffnet werden.

In vorteilhafter Weise wird dieser Notöffnungsmechanismus aus mindestens einer Leckstelle gebildet, die eine Blende, Düse oder auch ein Spalt sein kann. Diese mindestens eine Leckstelle dient in der hydraulischen Strecke dazu, dass darüber beim Betätigen des Kupplungspedals mit erhöhtem Kraftaufwand Druckmittel aus der hydraulischen Strecke entweichen kann, wodurch der Druck abgebaut wird und sich die Kupplung dadurch öffnen lässt. Diese Art, im Notfall zum Öffnen einer Kupplung einen Druckabfall in der hydraulischen Strecke zu realisieren, stellt eine besonders kostengünstige Variante dar.

In weiterer vorteilhafter Ausgestaltung des Erfindungsgedankens ist mindestens ein Überdruckventil in der hydraulischen Strecke angeordnet. Dieses Überdruckventil ist dabei in vorteilhafter Weise so gewählt, dass dessen Ansprechempfindlichkeit geringfügig über dem Druck liegt, der normalerweise vom Geberzylinder im Fahrbetrieb ausgeht. Auf diese Weise wird bereits bei einem geringfügigen Druckanstieg in der hydraulischen Strecke nach dem Geberzylinder ein "Ausfall im System" im Überdruckventil signalisiert, was dadurch sofort anspricht. Auf diese Weise kann ebenfalls der Druck im System mittels Kupplungspedalbetätigung abgebaut werden.

Alternativ dazu ist es besonders vorteilhaft im Ventilblock selbst, d. h. mit den darin angeordneten Bauteilen Druckventilschieber und Druckventilschieber und Druckventilfeder eine Überdruckfunktion gemäß der eines Überdruckventils nachzubilden. Dadurch werden die Abmessungen, insbesondere die Längen, von Druckventilkolben und Druckventilfeder in geeigneter Weise den möglicherweise am Ventilblock auftretenden Druckkräften in Äquivalenz zur Kupplungskraftkennlinie nachgebildet. Je nachdem, wie es die Platzverhältnisse im Ventilblock zulassen, können Druckventilkolben und/oder die Druckventilfeder verlängert werden. Für die Wahl der einzusetzenden Druckventilfeder ist außerdem spezifische Federkraft von Bedeutung, die letztendlich auch auf die Länge eine Auswirkung hat.

Diese Integration einer Überdruckfunktion direkt in den Ventilblock ist besonders günstig, da dadurch auf das Einbringen zusätzlicher einen Druckabbau bewirkende Bauteile in die hydraulische Strecke verzichtet werden kann.

Die Erfindung soll nachfolgend an einem Ausführungsbeispiel näher erläutert werden.

### Es zeigen:

- Figur 1: eine zwischen Geber- und Nehmerzylinder angeordnete Pedalkraftunterstützung,
- Figur 2: Pedalkraftunterstützung mit Notöffnungsmechanismus in Form von Leckstellen,
- Figuren 3a bis 3c: Pedalkraftunterstützung mit Notöffnungsmechanismus in Form von Überdruckventilen,
- Figur 4: weitere Variante für einen Notöffnungsmechanismus für eine Pedalkraftunter stützung.

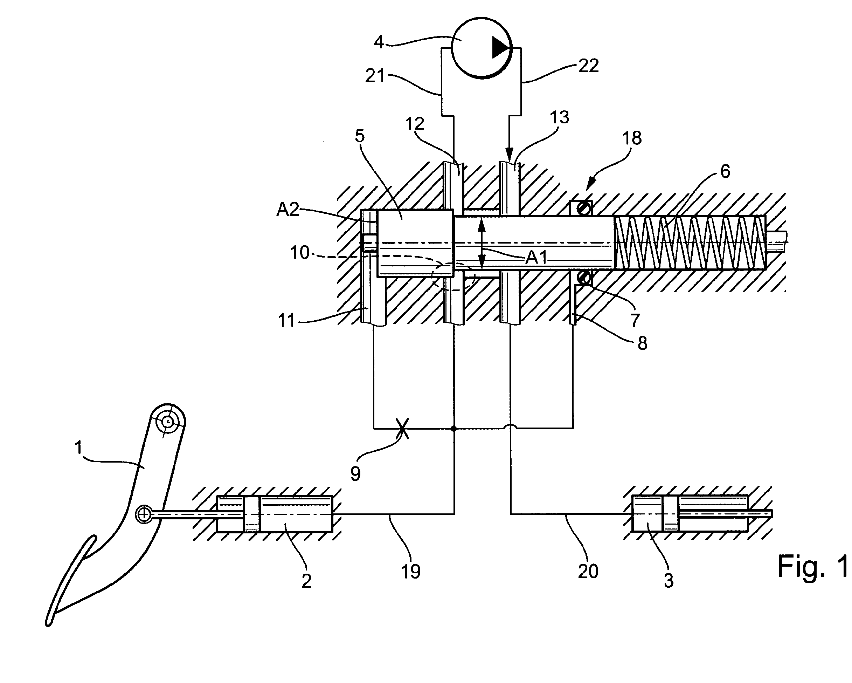

In Figur 1 ist schematisch eine Unterstützung für eine Pedalkraftbetätigung ohne Notöffnungsmechanismus dargestellt. Diese Servounterstützung ist in vorteilhafter Weise zwischen einem erstem Leitungsstrang 19 und einem zweitem Leitungsstrang 20, also zwischen Geberzylinder 2 und Nehmerzylinder 3 angeordnet und besteht aus einer Hydraulikpumpe 4 mit vorgeschaltetem Ventilblock 18. Ebenso gut kann der Ventilblock 18 auch direkt am Geberzylinder 2 oder am Nehmerzylinder 3 angeordnet sein. Im Gehäuse des Ventilblockes 18 sind im Wesentlichen ein Druckventilschieber 5 und eine Druckventilfeder 6 angeordnet, wobei der Ventilschieber 5 von der Druckventilfeder 6 mit ihrer spezifischen Federkraft mit Druck beaufschlagt wird. Der Ventilblock 18 weist mehrere Anschlüsse auf, die mit den Druckkanälen 11, 12 und 13 verbunden sind. Außer mit dem Ventilblock 18 ist der Druckkanal 13 mit dem zweiten Leitungsstrang 20 verbunden. Der Kanal 11 ist mit dem ersten Leitungsstrang 19 verbunden, in dem eine Dämpfungsblende bzw. ein Drosselventil 9 eingebracht ist. Weiterhin ist der erste Leitungsstrang 19 mit dem Druckkanal 10.1 und somit mit der Steuerkante 10 des Ventilblocks 18 verbunden. Der Druckkanal 12 stellt letztendlich eine Verbindung zum Eingang 21 der Pumpe 4 her.

Für die Servounterstützung am Kupplungspedal 1 besteht gemäß dem Stand der Technik die hydraulische Strecke aus zwei Hydraulikkreisläufen. Erstens dem "normalen" Kreislauf zur Druckbeaufschlagung der Kupplung, ausgehend vom Kupplungspedal 1 bis hin zum Kupplungsausrücker, der zwischen Geberzylinder 2 und Nehmerzylinder 3 abläuft und dem Hydraulikkreislauf zwischen einem der in der Figur 1 nicht dargestellten Elektromotor zum Antrieb der Pumpe 4 und der Hydraulikpumpe 4. Beide Kreisläufe werden über den Ventilblock 18 geleitet, worüber eine Verbindung zwischen beiden Kreisläufen realisierbar ist. Bei Nichtbetätigung des Kupplungspedals 1 sind beide Kreisläufe miteinander verbunden, laufen jedoch voneinander unabhängig ab, wobei sie ohne Druckverstärkung den Ventilblock 18 durchlaufen. Der Geberzylinder 2 ist, wie in Figur 1 dargestellt, mit dem ersten Leitungsstrang 19 und der Nehmerzylinder 3 mit dem zweiten Leitungsstrang 20 verbunden. Weiterhin steht die Hydraulikpumpe 4, mit ihrem Eingang 21 mit dem ersten Leitungsstrang 19 und mit ihrem Ausgang 22 mit dem zweiten Leitungsstrang 20 in Verbindung. Die Pumprichtung der Hydraulikpumpe 4 vom Eingang 21 zum Ausgang 22 ist durch einen Pfeil angedeutet.

Bei Betätigung des Kupplungspedals1 durch den Fahrer oder mittels elektrischem Aktor wird aufgrund der mechanischen Verbindung des Kupplungspedals 1 mit dem Geberzylinder 2 der in diesem angeordnete Kolben axial in Richtung Nehmerzylinder 3 verschoben und damit das sich im ersten Leitungsstrang 19 bzw. das sich im zweiten Leitungsstrang 20 befindende Hydraulikmedium mit Druck beaufschlagt. Der Druck steigt also im ersten Kreislauf an. Ohne Kraftunterstützung beziehungsweise Servounterstützung würde dieser Druck unverstärkt über den zweiten Leitungsstrang 20 an den Kolben des Nehmerzylinders 3 weitergegeben.

Durch den Einbau einer Servounterstützung nach dem Geberzylinder 2 wird das vom Kupplungspedal 1 mit Druck beaufschlagte Hydraulikmedium zunächst über den ersten Leitungsstrang 19 über den Kanal 11 zum Ventilblock 18 weitergeleitet. Das führt bei entsprechendem Druck dazu, dass die Vorspannkraft der Druckventilfeder 6 überwunden wird, die den Druckventilkolben 5 des Ventilblocks 18 zuvor in einer Stellung gehalten hat, die den Druckmittelfluss der beiden Kreisläufe ermöglichte. Der Druckventilschieber 5 wird dabei so weit axial verschoben, dass der von der Seite des Geberzylinders 2 aufgebaute und auf die Fläche A2 des Druckventilschiebers 5 wirkende Druck größer ist als die von der Druckventilfeder 6 auf den Druckventilschieber 5 aufgebrachte Federkraft bzw. der auf die Fläche A2 - A1 des Druckventilschiebers 5 wirkende Druck und somit die Steuerkante 10 zwischen Druckkanal 10.1 und Druckventilschieber 5 verkleinert wird. Dadurch steigt der Druck im Kreislauf der Hydraulikpumpe 4. In diesem Falle wird der volle Druck aus dem zweiten Kreislauf in den Teil des ersten Kreislaufes geleitet und diesem überlagert.

Fällt der zweite Kreislauf aufgrund eines inneren Defektes aus (Ausfall der Pumpe 4 oder des Motors der Pumpe 4), würde ohne Sicherheitsmechanismus die Kupplung nicht mehr zu betätigen sein, da damit auch der zweite Kreislauf weggefallen ist, der Druckventilschieber 5 im Ventilblock 18 in einer in "Verschlussstellung" für die Druckkanäle 12 und 13 für den ersten Kreislauf gehalten hat.

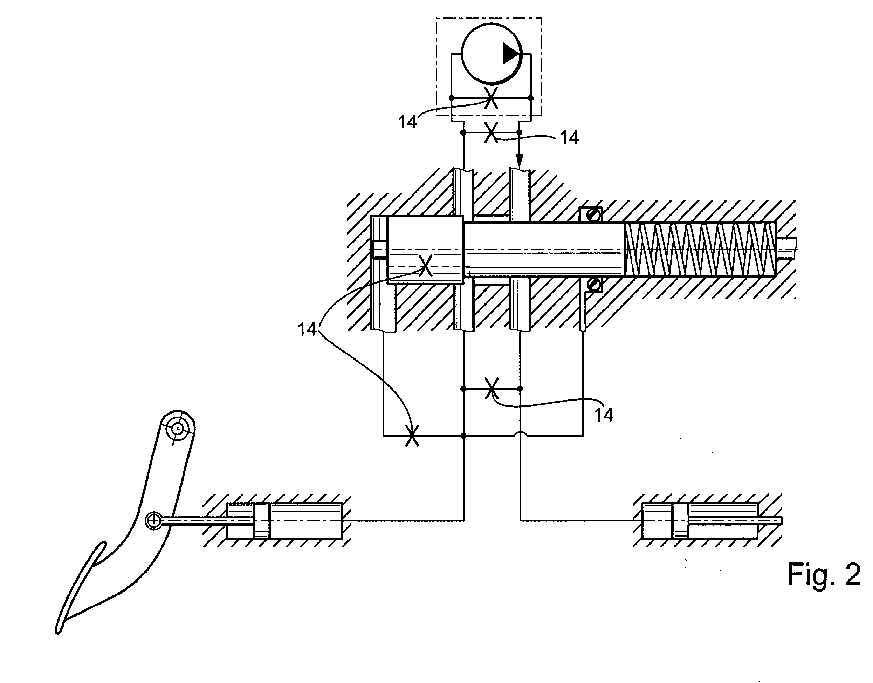

Die Figur 2 zeigt eine Hydraulikanordnung mit servounterstützter Pedalbetätigung gemäß Figur 1 mit einer Lösung für in diese Anordnung integrierten Notöffnungsmechanismus. Dieser Notöffnungsmechanismus besteht in diesem Falle darin, dass an einer oder mehreren Stellen innerhalb dieser hydraulischen Strecke gezielt Leckagestellen (Blenden, Düsen oder Spalte) vorgesehen sind, die allerdings so ausgelegt sind, dass ihr Einfluss auf den Druckaufbau im normalen Fahrbetrieb vernachlässigbar ist. Beim Ausfall des Systems wird dadurch jedoch gewährleistet, dass sich die Kupplung bei Betätigen des Kupplungspedals 1 mit erheblich höherer Pedalkraft wieder öffnet.

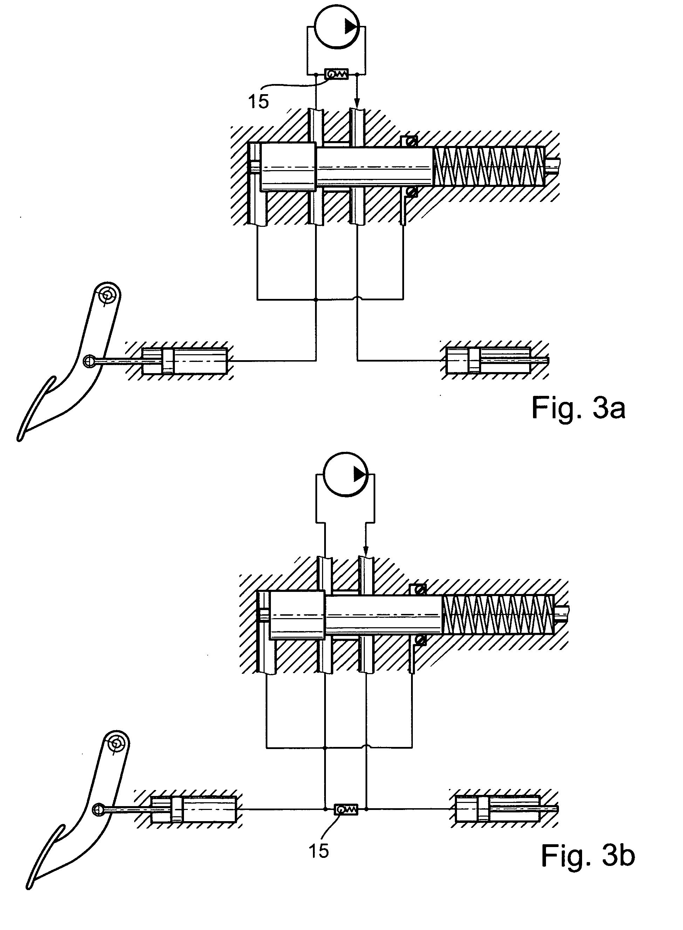

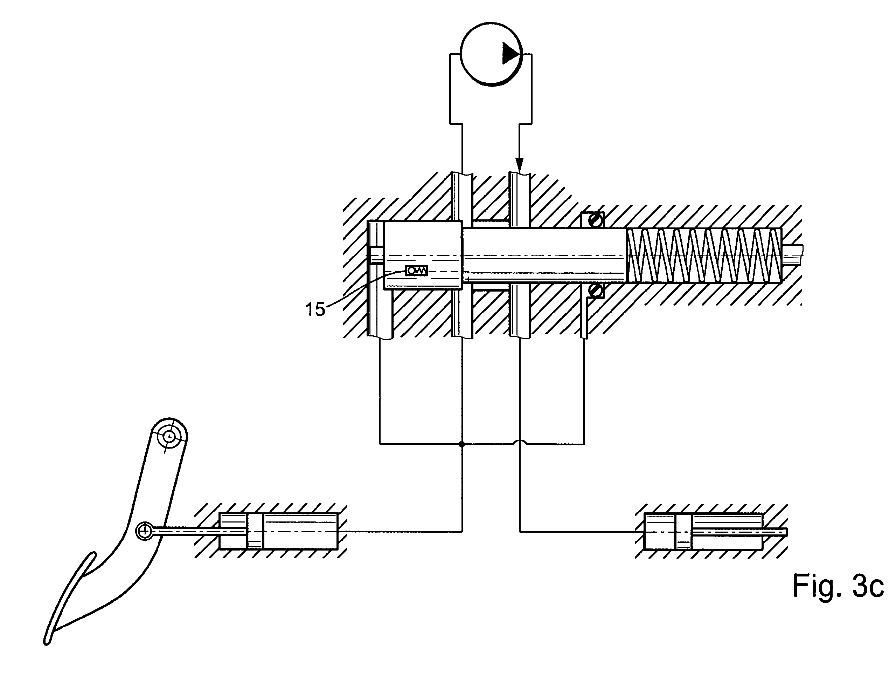

Die Figuren 3a bis 3c zeigen eine weitere Lösung für einen Notöffnungsmechanismus, der in diesem Fall aus mindestens einem in die hydraulische Strecke eingebrachtem Überdruckventil 15 (z. B. Kugel - Feder - Ventil) besteht, welches so funktioniert, dass es bei einem geringfügigen Druckanstieg gegenüber dem im Normalbetrieb herrschenden Geberzylinderdruck anspricht. Der Einbau dieses Überdruckventils 15 verbessert das Verhalten bei einem Systemausfall erheblich. Der Volumenstrom von Geberzylinder 2 zu Nehmerzylinder 3 muss in diesem Fall nicht mehr durch Leckagestellen geleitet werden. Aus diesem Grund sind auch beim Ausfall des Systems schnellere Kuppelvorgänge möglich. Diese erfordern einen Kraftaufwand, der nur geringfügig höher ist als ohne Servounterstützung. Das mindestens eine Überdruckventil 15 kann, ähnlich wie in Figur 2, an verschiedenen Stellen innerhalb der hydraulischen Strecke, wobei auch eine direkte Integration in eines der Bauteile Pumpe 4, Geberzylinder 2 oder Nehmerzylinder 3 möglich ist, platziert werden.

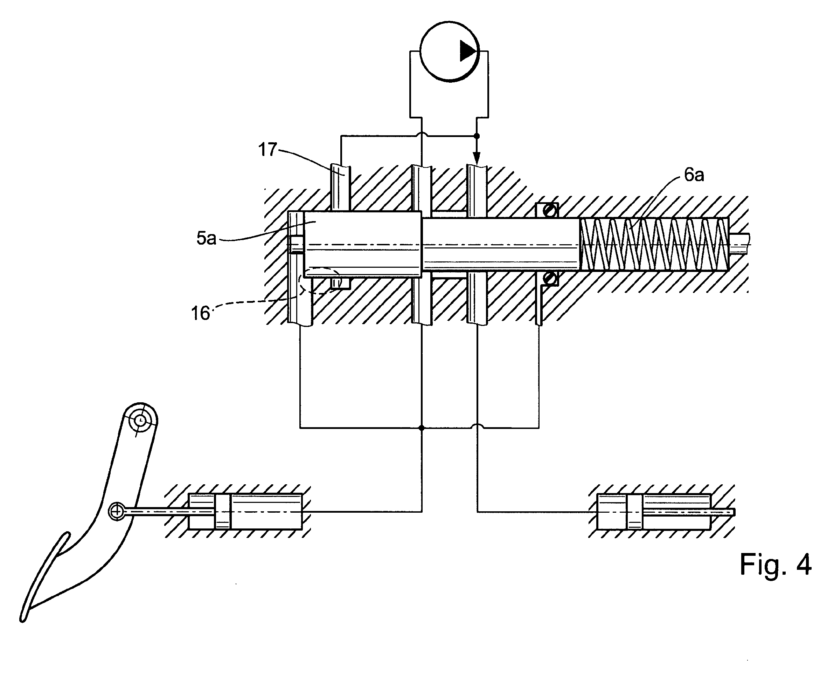

Alternativ zu den bisher beschriebenen Lösungen für einen Notöffnungsmechanismus kann im Ventilblock 18 eine Überdruckfunktion mit Hilfe der im Ventilblock 18 angeordneten Bauelemente, Druckventilkolben 5 und/oder Druckventilfeder 6, durch geeignete an ihnen durchgeführte geometrische Veränderungen erzeugt werden. Diese Alternativlösung ist in Figur 4 dargestellt. Die Druckventilfeder 6 wird dazu derart verlängert, um dadurch einen größeren Weg ausführen zu können, wodurch ein höherer Kraftanstieg realisierbar ist und demnach eine höhere Kupplungspedalkraft als ohne Servounterstützung erzielt wird. Im Normalbetrieb arbeitet der Druckventilkolben 5 an der Steuerkante 10. Fallen die Pumpe 4 oder der Elektromotor aus, verändern sich die Kraftverhältnisse an der Steuerkante 10 so, dass diese komplett geschlossen wird. Entgegen der Abmessung des Druckventilkolbens 5 gemäß Figur 1 kann dieser nun bei geberzylinderseitig weiter steigendem Druck deutlich über die Steuerkante 10 hinaus verschoben werden, bis der Druckventilkolben 5 die Steuerkante 16 freigibt und der Volumenstrom vom Geberzylinder 2 über die Steuerkante 16 durch eine integrierte Zusatzlamelle 17 (in Figur 4 schematisch angedeutet) zum Nehmerzylinder 3 fließen kann.

### Bezugszeichenliste

- 1: Kupplungspedal
- 2: Geberzylinder
- 3: Nehmerzylinder
- 4: Pumpe / Hydraulikpumpe .
- 5: Druckventilkolben / Druckventilschieber
- 5a: verlängerter Druckventilschieber
- 6: Druckventilfeder
- 6a: verlängerte Druckventilfeder
- 7: Druckventildichtung
- 8: Dichtungsentlastung
- 9: Dämpfungsblende /Drosselventil
- 10: Steuerkante Schieber
- 11: Kanal Geberzylinderdruckraum
- 11.1: Druckkanal
- 12: Druckkanal vom Geberzylinder
- 13: Druckkanal vom Nehmerzylinder
- 14: Leckstelle
- 15: Überdruckventil
- 16: Steuerkante für Notbetätigung
- 17: Zusatzlamelle
- 18: Ventilblock
- 19: erster Leitungsstrang
- 20: zweiter Leitungsstrang
- 21: Eingang Pumpe / Hydraulikpumpe
- 22: Ausgang Pumpe / Hydraulikpumpe

## Patentansprüche

1. Hydraulische Strecke mit pedalkraftunterstützter Druckbeaufschlagung, bestehend aus zwei Hydraulikkreisläufen für eine Kupplungsbetätigung, wobei im ersten Kreislauf im Wesentlichen ein Geberzylinder (2) und ein Nehmerzylinder (3) angeordnet sind und der zweite Kreislauf aus einem Elektromotor und einer Pumpe (4) gebildet wird und beide Kreisläufe gegenseitig regelbar über einen Ventilblock (18) mit Druckventilschieber (5) und Druckventilfeder (6) miteinander in Verbindung stehen, **dadurch gekennzeichnet, dass** in der hydraulischen Strecke ein Notöffnungsmechanismus (14, 15) der Kupplung vorgesehen ist.

2. Hydraulisches System nach Anspruch 1, **dadurch gekennzeichnet, dass** der Notöffnungsmechanismus aus mindestens einer Leckstelle (14) besteht.

3. Hydraulisches System nach Anspruch 1 und 2, **dadurch gekennzeichnet, dass** die Leckstelle (14) durch eine Blende, Düse oder einen Spalt charakterisiert wird.

4. Hydraulisches System nach Anspruch 1 und 2, **dadurch gekennzeichnet, dass** mindestens ein Überdruckventil (15) in der hydraulischen Strecke vorgesehen ist, dessen Ansprechempfindlichkeit geringfügig über dem Druck vom Geberzylinder (2) im normalen Fahrbetrieb gewählt wird.

5. Hydraulisches System nach Anspruch 1 und 2, **dadurch gekennzeichnet, dass** mit den längenmäßigen Abmessungen von Druckventilschieber (5) und Druckventilfeder (6) innerhalb des Ventilblocks (18) eine Überdruckfunktion realisierbar ist.

6. Hydraulisches System nach Anspruch 1, **dadurch gekennzeichnet, dass** die Dichtung (7) mit dem Geberzylinderdruck verbunden ist.
